Europäisches Patentamt

European Patent Office

Office européen des brevets

(11) Veröffentlichungsnummer : **0 198 042 B1**

(12) **EUROPÄISCHE PATENTSCHRIFT**

(45) Veröffentlichungstag der Patentschrift :
02.12.87

(21) Anmeldenummer : 85905315.9

(22) Anmeldetag : 10.10.85

(86) Internationale Anmeldenummer :
PCT/DE 85/00372

(87) Internationale Veröffentlichungsnummer :
WO/8602326 (24.04.86 Gazette 86/09)

(51) Int. Cl.⁴ : **B 62 D 63/06**

(54) **EINACHSANHÄNGER.**

(30) Priorität : **13.10.84 DE 3437670**

(43) Veröffentlichungstag der Anmeldung :
**22.10.86 Patentblatt 86/43**

(45) Bekanntmachung des Hinweises auf die Patenterteilung : **02.12.87 Patentblatt 87/49**

(84) Benannte Vertragsstaaten :
**AT BE CH DE FR GB IT LI NL SE**

(56) Entgegenhaltungen :
**EP-A- 0 040 513**
**DE-A- 3 151 901**
**FR-A- 1 199 457**
**FR-A- 1 236 011**
**FR-A- 2 263 906**
**FR-A- 2 383 062**
**US-A- 2 766 050**
**US-A- 3 427 041**
**US-A- 3 788 675**

(73) Patentinhaber : **STADLER FAHRZEUGWERK UND
BEHÄLTERBAU GMBH & CO.**
**Finninger Strasse 50**
**D-7910 Neu-Ulm (DE)**

(72) Erfinder : **BELLAN, Heinrich**
**Gänsäckerweg 2a**
**D-7915 Elchingen (DE)**

(74) Vertreter : **Dziewior, Kurt, Dr.-Ing.**
**Hermann Stehr-Weg 21**
**D-7900 Ulm/Donau (DE)**

## Beschreibung

Die Erfindung betrifft einen Einachsanhänger, der vorzugsweise zum Anhängen an einen PKW gedacht ist, mit einer Hilfsvorrichtung zu seinem Be- und Entladen, wobei seine Bodeneinheit mit Hilfe eines Antriebes heb- und senkbar ist (siehe FR-A-2 263 906). Solche Einachsanhänger sind sehr verbreitet und werden in vielen Fällen zum Transport beliebiger Materialien, beispielsweise von Baustoffen wie Mauersteinen, Pflastersteinen, Zementsäcken und dergleichen benutzt. Insbesondere Handwerker bedienen sich in großem Umfang solcher Einachsanhänger, um die von ihnen für Reperatur oder sonstige Bauzwecke benötigten Materialien zu ihrer Arbeitsstelle bzw. Baustelle transportieren zu können. Eine Vielzahl solcher Waren ist heute jedoch bereits vom Hersteller aus palettiert und in dieser Form im Handel zu beziehen.

Da die üblichen Einachsanhänger zum Transport solcher palettierten Waren nicht ohne weiteres geeignet sind, gibt es eine Reihe von Vorschlägen, um solche Anhänger zum Transport von palettierten Waren brauchbar zu machen. Diese bekannten Vorschläge beziehen sich in der Regel auf Hilfsvorrichtungen, welche an dem Einachsanhänger angebracht sind, welche ermöglichen, den Ladeboden des Anhängers entweder abzusenken und/oder zu kippen.

Ein solcher Kippanhänger, der aus einem Rahmen besteht, welch letzterer wiederum aus einem fahrbaren Chassisteil mit zwei Rädern und aus einem Schleppanhängeteil mit einer Kupplung zur Verbindung mit einem Schleppfahrzeug besteht, ist aus der DE-A-32 02 423 bekannt.

Aus der DE-C-22 64 765 ist ein Fahrzeug mit einem hydraulisch betätigbaren Hub- und Kippgerät zur Aufnahme von Wechsellasten bekannt, wobei ein im wesentlichen U-förmiger, die Last aufnehmender Tragrahmen über Scherenarme mit einem gabelförmig ausgebildeten, nach hinten offenen Fahrzeugrahmen mittels ortsfesten Gelenken und gelenkartigen Schiebeführungen verbunden ist.

Ferner ist aus der DE-A-29 34 606 ein Fahrzeuganhänger mit beweglicher Ladebrücke und fest mit dem Fahrzeugrahmen verbundener Hubvorrichtung bekannt, bei dem die Ladebrücke an lotrecht angeordneten Pendelarmen hängt, die sich bei Absenken der Ladebrücke verlängern und beim Anheben verkürzen.

Auch aus der DE-A-32 23 159 ist ein einachsiger Anhänger zum Transport von beladenen Paletten mit einem Rahmen, einer Anhängevorrichtung, einer auf dem Rahmen angeordneten Bodenplatte und mindestens einer ausfahrbaren Bodenstütze am Heck bekannt. Bei dieser bekannten Anordnung ist der Rahmen in seinem hinter der Radachse liegenden Bereich als nach hinten offenes U ausgebildet und die Bodenplatte ist in diesem Bereich einoder mehrfach quergeteilt und herausnehmbar ; auf dem Rahmen ist dann ein Hubportal um eine horizontale Querachse schwenkbar gelagert, welches ein mit kurzem Weg heb- und senkbares Ladegeschirr aufweist.

Schließlich sei noch darauf hingewiesen, daß bei mehrachsigen Fahrzeugen häufig Hilfsvorrichtungen für die Aufnahme und das Absetzen von Containern vorgesehen sind und daß sich auch Abroll- und Absetzkipper sehr gut bewährt haben.

Auch der Erfindung liegt die Aufgabe zugrunde, einen Einachsanhänger, der insbesondere für PKWs gedacht ist, so auszubilden, daß er ohne Beeinträchtigung seiner üblichen Verwendungsformen zum Absetzen beladener Paletten und auch zum Aufnehmen solcher Paletten geeignet ist und im Bedarfsfall auch gekippt werden kann. Schon aus Platzgründen ist es dabei erwünscht, die erfindungsgemäße Aufgabe so zu lösen, daß der Anhänger nicht noch mehr oder weniger komplizierte Hilfsvorrichtungen aufnehmen und tragen muß, wie sie zum Teil in den oben erwähnten bekannten Anhängern vorgeschlagen worden sind.

Der Einachsanhänger nach der Erfindung ist demgemäß dadurch gekennzeichnet, daß die Bodeneinheit aus Tragarmen, die zur Aufnahme von Paletten freitragend in Richtung zur Anhängerrückwand verlaufen sowie aus herausnehmbaren Bodenplatten, die oberhalb der Tragarme einsetzbar sind, bestehen und daß diese Bodeneinheit oder nur die Tragarme mit Hilfe des Antriebs in gleicher Weise wie die Arme eines Gabelstaplers heb- und senkbar ist.

Als Vorbild für die erfindungsgemäße Ausbildung eines Einachsanhängers diente also der bekannte Gabelstapler, der ja in großem Umfang zum Transport von palettiertem Gut verwendet wird. Der Einachsanhänger nach der Erfindung weist also eine Bodeneinheit auf, welche sowohl gabelartige Tragarme als auch normale Bodenplatten besitzt. Die Bodenplatten sind herausnehmbar, so daß die Bodeneinheit nun nur noch gesenkt zu werden braucht, um dann in gleicher Weise benutzbar zu sein wie ein üblicher Gabelstapler.

Gemäß einer Weiterbildung der Erfindung weist die Bodeneinheit nun noch weitere Befestigungsmittel auf, welche ein wahlweises Einsetzen der Bodenplatten auch unterhalb der Tragarme in einer parallel zur Tragarmebene verlaufenden Ebene ermöglichen. Diese Unterbringung der Bodenplatten ist dann erforderlich, wenn auf dem Einachsanhänger palettierte Waren geladen sind. Nach dem Anheben der Bodeneinheit in die Transportstellung des Anhängers werden die zuvor herausgenommenen Bodenplatten in Führungen unterhalb der gabelförmigen Tragarme eingeschoben, so daß sie am Entladeort der Paletten wieder verfügbar sind. An diesem Entladeort erfolgt zunächst wieder die Absenkung der Bodeneinheit bis zum Erdboden, dann die Entladung der Paletten und schließlich nach dem wieder Anheben der Bodeneinheit die Einführung der Bodenplatten in ihre normale Lage. Der Einachsanhänger ist dann wiederum als normaler Pritschenanhänger für den Transport allgemeiner Güter verwendbar.

Wegen des Beladens und Entladens von palettierten Warren ist es erforderlich, daß der Hebeund Senkmechanismus des erfindungsgemäßen Einachsanhängers derart ausgebildet ist, daß die Bewegungsphase vom Boden in die Transportstellung und umgekehrt annähernd parallel verläuft und daß sie bei Überschreiten der Transportstellung in eine Kippbewegung zwecks Entleerung des Anhängers nach hinten übergeht.

Bei einer Ausführungsform eines Einachsanhängers nach der Erfindung wird dies dadurch erreicht, daß zwei die Achse der Anhängerräder tragende, beiderseits der Bodeneinheit verlaufende Achsarme sowie die am Anhänger befestigten Enden der Zugdeichsel in zwei verdrehungssteif miteinander verbundene Seitenträgern der Bodeneinheit in einem vorgegebenen Abstand drehbar gelagert sind ; dabei weisen die Zugdeichsel an ihren lagerseitigen Enden jeweils einen über die Lagerstelle hinausreichenden, eine Gleitrolle tragenden Steuerhebel und die Achsarme ebenfalls je einen über ihre Lagerstelle hinausreichenden Hebel mit Steuerkurve für die Gleitrollen auf. Die jeweils miteinander korrespondierenden Hebel sind nun derart dimensioniert und einerseits mit der Kolbenstange andererseits mit dem Zylinder einer Hydraulik in der Weise gelenkig verbunden, daß die Bodeneinheit dank der Führung der Gleitrollen an der Steuerkurve der Hebel mit Erhöhung des Drückes im Hydraulikzylinder von ihrer Bodenlage über ihre Transportlage in die Kipplage überführt wird.

Mit dieser speziellen Konstruktion ist also sichergestellt, daß die oben geforderten Bewegungsphasen mit Hilfe des Hebe- und Senkmechanismus ablaufen.

Es ist nun gemäß einer Weiterbildung der Erfindung eine Verriegelung vorgesehen, welche den Hebe- und Senkmechanismus in der Transportstellung blockiert. Dies ist unbedingt erforderlich, damit beim Transport dieser Mechanismus nicht in Tätigkeit tritt, wodurch Unfälle verursacht werden können.

Die Verriegelungselemente sind nun zweckmäßig durch einen entfernbaren hinteren Querträger gebildet, der in die Bodeneinheit einrastbar ist und vorzugsweise gleichzeitig die Funktion einer Stoßstange ausübt.

An diesem hinteren Querträger ist nun ein Hebel angelenkt, der zum Zwecke der Blockierung des Hebe- und Senkmechanismus eine Einrastung der Radfederung bewirkt.

Der der Verriegelung dienende hintere Querträger, der also zum Beladen des Anhängers mit palettierten Waren abgenommen wird, weist ferner zweckmäßig Anschläge oder Ausnehmungen auf, die in der eingerasteten Stellung des Querträgers als Auflage für die freitragenden Enden der Tragarme dienen. Damit ist eine Entlastung dieser Tragarme während des Transports des palettierten Waren erreicht.

Für die Betätigung des Hebe- und Senkmechanismus verwendet man zweckmäßig eine Hydraulik, welche von Hand oder durch Motor anzutreiben ist. Die bei dieser Hydraulik verwendeten Hydraulikzylinder werden nun derart in Reihe geschaltet mit jeweils der einen Aufhängung der Radfederung, daß sie beim Transport als Dämpfung für die Fahrzeugfederung wirken. Durch diese zusätzlichen Stoßdämpfer sind die Fahreigenschaften des erfindungsgemäßen Einachsanhängers besonders gut.

In den Zeichnungen ist ein Ausführungsbeispiel des Erfindungsgegenstandes dargestellt.

Es zeigen :

Figur 1 einen Einachsanhänger in perspektivischer Darstellung mit teilweise abgenommenem hinteren Träger,

Figur 2 einen Einachsanhänger in abgesenkter Stellung bei der Aufnahme oder dem Absetzen einer Palette,

Figur 3 einen Einachsanhänger in gekippter Stellung,

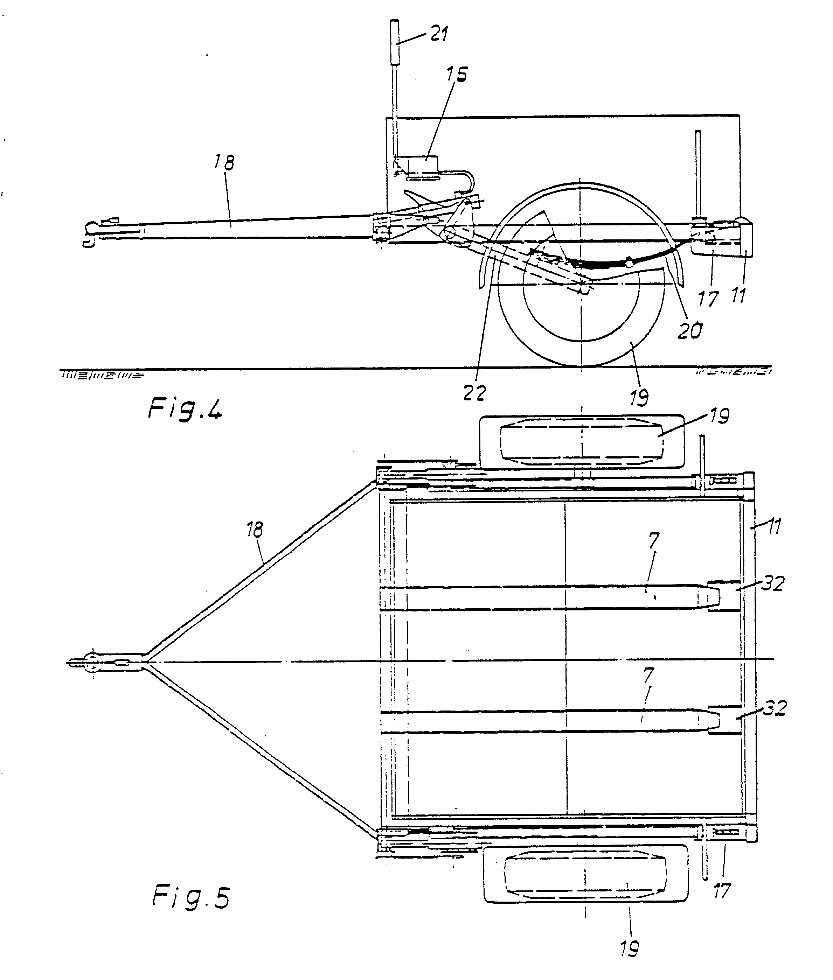

Figur 4 den Einachsanhänger in Seitenansicht mit der konstruktiven Ausbildung des Hebe- und Senkmechanismus,

Figur 5 eine Aufsicht auf den in Fig. 4 dargestellten Einachsanhänger,

Figur 6 nochmals eine der Fig. 4 entsprechende Seitenansicht, jedoch beschränkt auf die wesentlichen Teile des Hebe- und Senkmechanismus,

Figuren 7 und 8 die gleiche Seitenansicht wie in Fig. 6, jedoch in Fig. 7 in abgesenkter Stellung und in Fig. 8 in gekippter Stellung.

Der Einachsanhänger besteht aus einer Ladepritsche 1, an welcher sowohl die Zugdeichsel 18 als auch die Räder 19 schwenkbar gelagert und durch ein Getriebe 4 zu einem Hebe- und Senkmechanismus verbunden sind. Die Ladepritsche 1 wird durch einen Querträger 6, mit diesem fest verbundene Tragarme 7, Lagerplatten 8 und Seitenwände 9, ferner von der Bodeneinheit 2 entfernbare Bodenplatten 10 und einem schwenkbaren oder einsteckbaren Träger 11 gebildet. Vorne und hinten Wird die Ladepritsche 1 durch Klappen 12, 13 abgeschlossen. Die Zugdeichsel 18 und die Räder 19 sind über den Hebe- und Senkmechanismus 4 mittels Hydraulikzylindern 14 schwenkbar. Die Verriegelung in der Transportstellung erfolgt mit Hilfe der Riegel 17 über die Federungen 20.

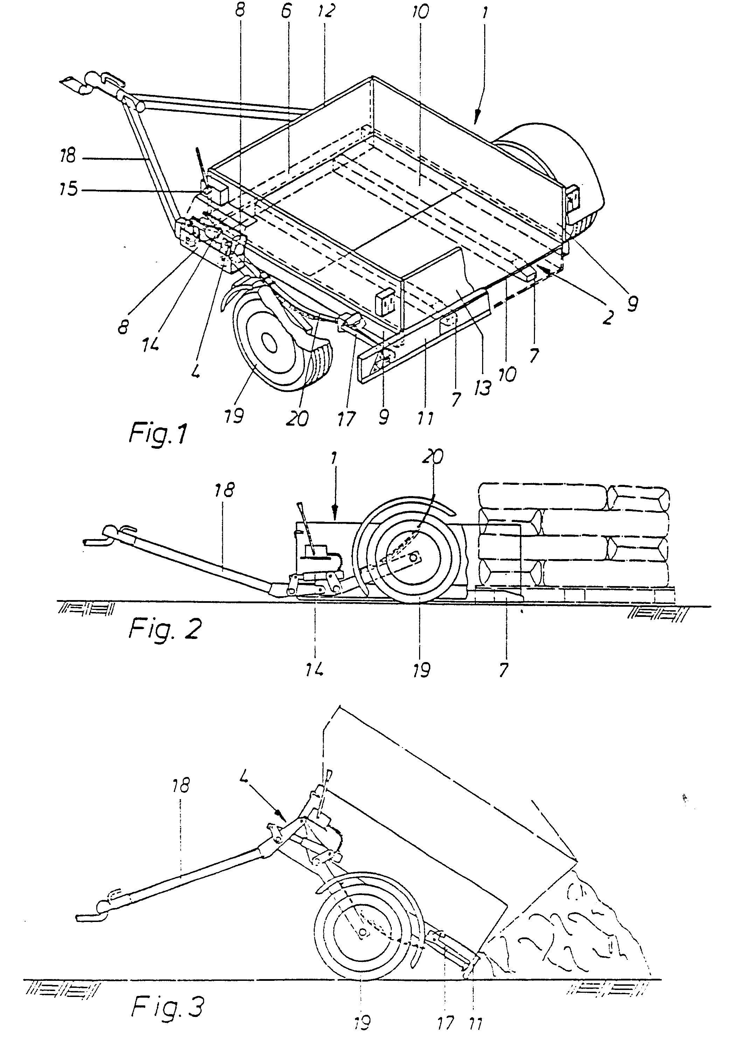

Die Bodenplatten 10 verlaufen oberhalb der Tragarme 7 und sind in seitlichen Führungen gehalten. Für die Aufnahme oder das Absetzen von Paletten sowie schwerer Gegenstände werden zunächst die Klappen 13, der Träger 11 und die Bodenplatten 10 entfernt. Danach werden mit dem Antrieb 15 die Tragarme 7 und damit die Ladepritsche 1 in die gewünschte Stellung gebracht. Diese Ladestellung für die Aufnahme von Paletten ist in Fig. 2 dargestellt. Nach dem Aufladen dieser Paletten durch Rückwärtsfahren des Anhängers wird dieser mit Hilfe des Antriebes 15 wieder in die Transportstellung gebracht und dann wird der Querträger 11 aufgesetzt, an dem sich nunmehr die Achsfederung 20 abstützt.

Mit dem Aufsetzen dieses Querträgers wird gleichzeitig das Absenken blockiert, so daß der Senkmechanismus während des Transportes nicht betätigt werden kann. An den Querträger 11 sind den Tragarmen 7 gegenüberliegend Auflagen 32 angeschweißt, so daß die an sich freitragend ausgebildeten Tragarme 7 nach erfolgter Aufnahme der Ladung sich an diesen Auflagen 32 abstützen können. Damit wird die Stabilität der aufgenommenen Ladung verbessert.

Soll die Ladung des Anhängers gekippt werden, so wird lediglich die Klappe 13 entfernt und die Ladepritsche 1 über die Transportstellung hinaus mit dem Antrieb 15 angehoben. Diese Stellung ist in Seitenansicht in Fig. 3 wiedergegeben.

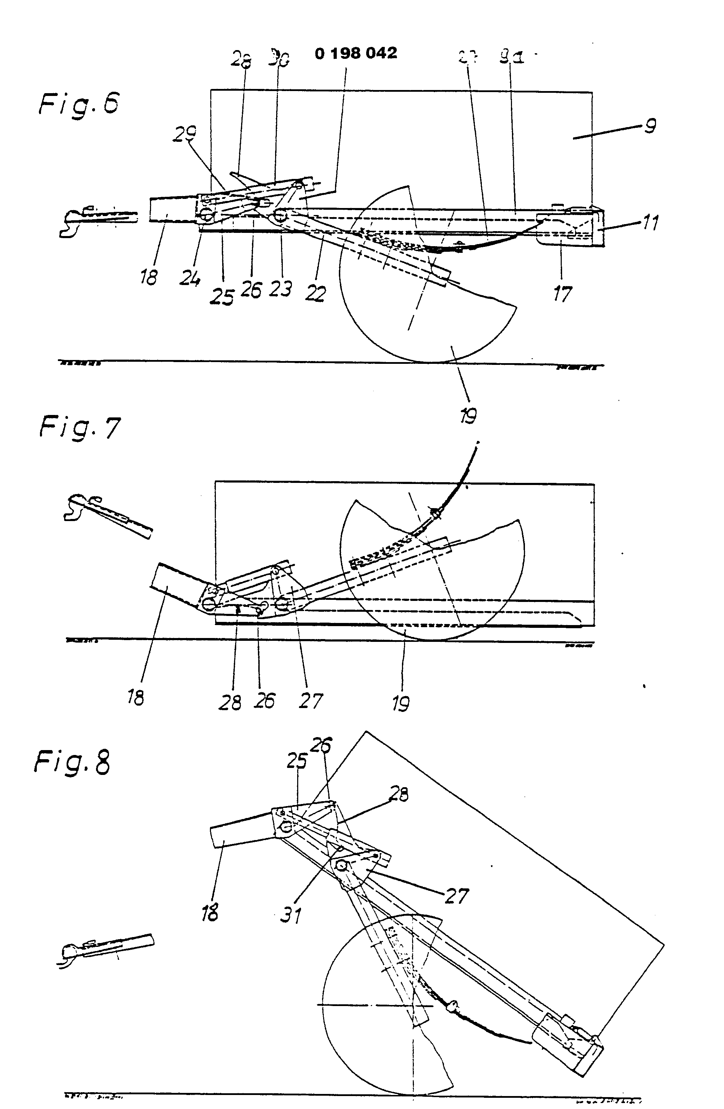

Anhand der Fig. 6, 7 und 8 soll nun das Prinzip des Hebe- und Senkmechanismus erläutert werden. Wie sich aus Fig. 6 ergibt, sind zwei die Achse der Anhängerräder 19 tragende, beiderseits der Bodeneinheit 2 verlaufende Achshalter 22 vorgesehen. Diese Achshalter 22 sowie die am Anhänger befestigten Enden der Zugdeichsel 18 sind in zwei verdrehungsteif miteinander verbundenen Seitenträgern 9a der Bodeneinheit 2 in einem vorgegebenen Abstand drehbar gelagert. Die Lagerstellen dieser beiden Teile sind mit 23 und 24 bezeichnet. Sowohl der Achshalter 22 als auch die Zugdeichsel 18 weisen nun über diese Lagerstellen 23 und 24 hinausgehende Hebel 27 und 25 auf, welche mit Hilfe einer am Ende des Steuerhebels 25 angeordneten Gleitrolle 26 und einer am Hebel 27 angeordneten Steuerkurve 28 miteinander in Eingriff kommen. Die jeweilige Eingriffsstellung wird durch einen Hydraulikzylinder festgelegt, dessen Zylinder 30 mit einem Punkt des Hebels 27 und dessen Kolbenstange 29 mit einem Punkt der Zugdeichsel gelenkig verbunden ist. Die Steuerkurve 28 an dem Hebel 27 besteht aus einem Schlitz 31 und einem sich daran anschließenden Kurventeil.

Wie sich aus der Darstellung nach Fig. 6, welche die Transportstellung sein soll, ergibt, befindet sich die Gleitrolle 26 des Steuerhebels 25 in dieser Stellung am Eingang des Steuerschlitzes 31. Beim Absenken der Bodeneinheit des Anhängers durch Betätigung des Hydraulikzylinders gleitet die Gleitrolle 26 zunächst in den Schlitz bis fast zu seinem Endpunkt und kehrt anschließend wieder zurück, so daß sich dann die Stellung nach Fig. 7 ergibt. Das ist die abgesenkte Stellung des Anhängers, in welcher er beladen und entladen werden kann.

Aus Fig. 7 erkennt man auch gleichzeitig, daß diese Absenkung der Bodeneinheit 2 erst dann möglich ist, wenn der Querträger 11 abgenommen ist. Da dieser Querträger 11 gleichzeitig als Auflage für das hintere Ende der Federung 20 dient, kan ja der Hebe- und Senkmechanismus erst dann in Funktion kommen, wenn dieses Federende frei beweglich ist, so wie es in Fig. 7 dargestellt ist. Der aus Fig. 6 erkennbaren konstruktiven Ausbildung des Hebe- und Senkmechanismus mit Hilfe der Hydraulikpumpe kann man entnehmen, daß die beidseitigen Hydraulikzylinder 14 bzw. 30 mit jeweils der einen Aufhängung der Radfederung 20 derart in Reihe geschaltet sind, daß sie beim Transport als Dämpfung für die Fahrzeugfederung wirken.

Soll der Anhänger aus der in Fig. 6 dargestellten Transportlage in die Kipplage geschwenkt werden, so muß der Hydraulikantrieb in entgegen gesetzter Richtung betätigt werden, wodurch die Gleitrolle 26 des Steuerhebels 25 an der Kurve 28 des Hebels 27 entlangläuft und damit den Kippvorgang bewirkt. In seiner Endstellung ist dieser Kippvorgang in Fig. 8 gezeichnet.

Zu den Fig. 6, 7 und 8 soll noch darauf hingewiesen werden, daß die Zugdeichsel 18 abgeschnitten dargestellt ist, so daß in diesen Figuren lediglich deren beiden Enden zu erkennen sind.

Bei der anhand des Ausführungsbeispiels beschriebenen Ausführungsform der Erfindung ist die gesamte Bodeneinheit des Anhängers heb-, senk- und kippbar. Man könnte die Konstruktion aber auch so ausbilden, daß nur die freitragend angeordneten Tragarme diesem Bewegungsablauf unterzogen werden.

Während also in dem Ausführungsbeispiel die Tragarme 7 einseitig an einem mit der Bodeneinheit verankerten Querträger befestigt, z. B. angeschweißt sind, sind die Tragarme bei der erwähnten andersartigen Konstruktion in einer senkrechten Kulissenführung auf- und abwärts bewegbar. Diese Kulisse ist in der obersten Stellung der Tragarme abgewinkelt, so daß auch in diesem Falle die Tragarme bei Überschreiten der obersten Kulissenstellung einer Kippbewegung unterliegen, so daß das Ladegut ebenfalls abgekippt werden kann.

Auch in diesem Falle müßten naturgemäß die den Pritschencharakter des Anhängers herstellenden Bodenplatten herausnehmbar ausgebildet sein, um für die Bewegung der Tragarme Platz zu haben.

## Patentansprüche

1. Einachsanhänger, vorzugsweise für PKW, mit einer Hilfsvorrichtung zu seinem Be- und Entladen, wobei seine Bodeneinheit (2) mit Hilfe eines Antriebes (15) heb- und senkbar ist, dadurch gekennzeichnet, daß die Bodeneinheit (2) aus Tragarmen (7), die zur Aufnahme von Paletten freitragend in Richtung zur Anhängerrückwand verlaufen sowie aus herausnehmbaren Bodenplatten (10), die oberhalb der Tragarme (7) einsetzbar sind, bestehen und daß diese Bodeneinheit (2) oder nur die Tragarme (7) mit Hilfe des Antriebes (15) in gleicher Weise wie die Arme eines Gabelstaplers heb- und senkbar ist.

2. Einachsanhänger nach Anspruch 1, dadurch gekennzeichnet, daß seine Bodeneinheit (2) weitere Befestigungsmittel aufweist, welche ein wahlweises Einsetzen der Bodenplatten (10) auch unterhalb der Tragarme (7) in einer parallel zur Tragarmebene verlaufenden Ebene ermöglichen.

3. Einachsanhänger nach Anspruch 1 und 2, dadurch gekennzeichnet, daß sein Hebe- und Senkmechanismus (4) derart ausgebildet ist, daß die Bewegungsphase vom Boden in die Transportstellung und umgekehrt annähernd parallel verläuft und daß sie bei Überschreiten der Transportstellung in eine Kippbewegung zwecks Entleerung des Anhängers nach hinten übergeht.

4. Einachsanhänger nach Anspruch 1 bis 3, dadurch gekennzeichnet, daß er eine Verriegelung (17) aufweist, welche den Hebe- und Senkmechanismus (4) in der Transportstellung blockiert.

5. Einachsanhänger nach Anspruch 1 bis 4, dadurch gekennzeichnet, daß die Verriegelungselemente durch einen entfernbaren hinteren Querträger (11) gebildet sind, der vorzugsweise gleichzeitig die Funktion einer Stoßstange ausübt.

6. Einachsanhänger nach Anspruch 1 bis 5, dadurch gekennzeichnet, daß an dem hinteren Querträger (11) ein Hebel (17) angelenkt ist, der zum Zwecke der Blockierung des Hebe- und Senkmechanismus eine Einrastung der Radfederung (20) bewirkt.

7. Einachsanhänger nach Anspruch 1 bis 6, dadurch gekennzeichnet, daß der entfernbare hintere Querträger (11) Anschläge oder Ausnehmungen aufweist, die in seiner eingerasteten Stellung als Auflage für die freitragenden Enden der Tragarme (7) dienen.

8. Einachsanhänger nach Anspruch 1 bis 7, dadurch gekennzeichnet, daß er eine von Hand oder durch Motor zu betätigende Hydraulik (14) aufweist, welche den Hebe- und Senkmechanismus antreibt.

9. Einachsanhänger nach Anspruch 1 bis 8, dadurch gekennzeichnet, daß die Hydraulikzylinder (14) für den Hebe- und Senkmechanismus derart in Reihe geschaltet sind mit jeweils der einen Aufhängung der Radfederung (20), daß sie beim Transport als Dämpfung für die Fahrzeugfederung wirken.

10. Einachsanhänger nach Anspruch 3, dadurch gekennzeichnet, daß zwei die Achse der Anhängerräder (19) tragende, beiderseits der Bodeneinheit (2) verlaufende Achshalter (22) sowie die am Anhänger befestigten Enden der Zugdeichsel (18) in zwei verdrehungssteif miteinander verbundenen Seitenträgern (9a) der Bodeneinheit (2) in einem vorgegebenen Abstand drehbar gelagert sind, daß die Zugdeichsel (18) an ihren lagerseitigen Enden jeweils ein über die Lagerstelle (24) hinausreichenden, eine Gleitrolle (26) tragenden Steuerhebel (25) und die Achshalter (22) ebenfalls je einen über ihre Lagerstelle (25) hinausreichenden Hebel (27) mit Steuerkurve (28) für die Gleitrollen (26) aufweisen und daß die korrespondierenden Hebel (25, 27) derart dimensioniert und einerseits mit der Kolbenstange (29) andererseits mit dem Zylinder (30) eine Hydraulik in der Weise gelenkig verbunden sind, daß die Bodeneinheit (2) dank der Führung der Gleitrollen (26) an den Steuerkurven (28) der Hebel (27) mit Erhöhung des Druckes im Hydraulikzylinder (30) von ihrer Bodenlage über ihre Transportlage in die Kipplage überführt wird.

**Claims**

1. A single-axle trailer, preferably for passenger motor vehicles, comprising an auxiliary device for loading and unloading same, wherein the floor unit (2) thereof can be raised and lowered by means of a drive (15), characterised in that the floor unit (2) comprises carrier arms (7) which to support pallets extend in cantilever relationship in the direction towards the rear wall of the trailer, and removable floor panels (10) which can be fitted above the carrier arms (7), and that said floor unit (2) or only the carrier arms (7) can be raised and lowered by means of the drive (15) in the same manner as the arms of the fork lift truck.

2. A single-axle trailer according to claim 1 characterised in that its floor unit (2) has further fixing means which also permit the floor panels (10) to be selectively fitted beneath the carrier arms (7) in a plane parallel to the plane of the carrier arms.

3. A single-axle trailer according to claim 1 and claim 2 characterised in that its lifting and lowering mechanism (4) is of such a construction that the movement phase from the ground into the transportation position and vice-versa occurs in approximately parallel relationship and that when it goes beyond the transportation position, it goes into a tipping movement for emptying the trailer in a rearward direction.

4. A single-axle trailer according to claims 1 to 3 characterised in that it has a locking means (17) for blocking the lifting and lowering mechanism (4) in the transportation position.

5. A single-axle trailer according to claims 1 to 4 characterised in that the locking elements are formed by a removable rearward transverse bearer (11) which preferably simultaneously performs the function of a bumper.

6. A single-axle trailer according to claims 1 to 5 characterised in that mounted on the rearward transverse bearer (11) is a lever (17) which provides for engagement of the wheel springing (20) for the purposes of blocking the lifting and lowering mechanism.

7. A single-axle trailer according to claims 1 to 6 characterised in that the removable rearward transverse bearer (11) has abutments or recesses which in its engaged position serve as a support means for the cantilever ends of the carrier arms (7).

8. A single-axle trailer according to claims 1 to 7 characterised in that it has a hydraulic system (14) which is to be actuated manually or by a motor and which drives the lifting and lowering mechanism.

9. A single-axle trailer according to claims 1 to 8 characterised in that the hydraulic cylinders (14) for the lifting and lowering mechanism are respectively connected in series with the one suspension means of the wheel springing (20) in such a way that in the course of transportation they act as a damping means for the vehicle springing.

10. A single-axle trailer according to claim 3 characterised in that two axle holders (22) which carry the axle of the trailer wheels (19) and which extend on both sides of the floor unit (2), and the ends, which are fixed to the trailer, of the two bar assembly (18) are rotatably mounted at a predetermined spacing in two side bearers (9a) of the floor unit (2), which are connected together in a torsion-resistant manner, that the two bar assembly (18) is provided at each of its mounting ends with a respective control lever (25) which extends beyond the mounting means (24) and which carries a slide roller (26) and the axle holders (22) each also have a respective lever (27) which extends beyond the mounting means (23) thereof, with a control cam (28) for the slide rollers (26), and that the corresponding levers (25, 27) are so dimensioned and are pivotally connected on the one hand to the piston rod (29) and on the other hand to the cylinder (30) of a hydraulic means that the floor unit (2), by virtue of the slide rollers (26) being guided on the control cams (28) of the levers (27), with an increase in the pressure in the hydraulic cylinder (30), is transferred from its ground position by way of its transportation position into the tipping position.

## Revendications

1. Remorque à un essieu de préférence pour une voiture de tourisme, comportant un dispositif auxiliaire utilisé pour son chargement et son déchargement et dans laquelle son unité formant plancher (2) peut être soulevée et abaissée à l'aide d'un dispositif d'entraînement (15), caractérisée en ce que l'unité formant plancher (2) est constituée par des bras de support (7), qui s'étendent en porte-à-faux en direction de la paroi arrière de la remorque, de manière à recevoir des palettes, ainsi que par des plaques de plancher amovibles (10), qui peuvent être insérées au-dessus des bras de support (7), et que cette unité formant plancher (2) ou uniquement les bras de support (7) peuvent être soulevés et abaissés à l'aide du dispositif d'entraînement (15), de la même manière que les bras d'un chariot élévateur à fourche.

2. Remorque à un essieu selon la revendication 1, caractérisée en ce que son unité formant plancher (2) comporte d'autres moyens de fixation, qui permettent d'insérer au choix les plaques de plancher (10) également au-dessous des bras de support (7) dans un plan parallèle au plan des bras de support.

3. Remorque à un essieu selon les revendications 1 et 2 prises dans leur ensemble, caractérisée en ce que son mécanisme de levage et d'abaissement (4) est agencé de telle sorte que la phase de déplacement depuis le plancher jusque dans la position de transport et inversement s'effectue approximativement selon un déplacement parallèle et que lors du déplacement dans la position de transport, cette phase de déplacement se poursuit par un déplacement en basculement en vue de réaliser le vidage de la remorque vers l'arrière.

4. Remorque à un essieu selon les revendications 1 à 3 prises dans leur ensemble, caractérisée en ce qu'elle comporte un dispositif de verrouillage (17) qui bloque le mécanisme de levage et d'abaissement (4) dans la position de transport.

5. Remorque à un essieu selon les revendications 1 à 4 prises dans leur ensemble, caractérisée en ce que les organes de verrouillage sont formés par un support transversal arrière démontable (11), qui joue de préférence simultanément le rôle d'une barre de poussée.

6. Remorque à un essieu selon les revendications 1 à 5 prises dans leur ensemble, caractérisée en ce que sur le support transversal arrière (11) se trouve articulé un levier (17), qui réalise un encliquetage de la suspension de roues (20) en vue de réaliser le blocage du système de levage et d'abaissement.

7. Remorque à un essieu selon les revendications 1 à 6 prises dans leur ensemble, caractérisé en ce que le support transversal arrière démontable (11) comporte des butées ou des évidements, qui servent, lorsque le support est dans sa position encliquetée, d'appui pour les extrémités en console des bras de support (7).

8. Remorque à un essieu selon les revendications 1 à 7 prises dans leur ensemble, caractérisée en ce qu'elle comporte un système hydraulique (4) devant être actionné manuellement ou à l'aide d'un moteur et qui entraîne le mécanisme de levage et d'abaissement.

9. Remorque à un essieu selon les revendications 1 à 8 prises dans leur ensemble, caractérisée en ce que les vérins hydrauliques (14) prévus pour le mécanisme de levage et d'abaissement sont branchés chacun en série avec l'un des supports respectifs de la suspension de roues (20) de telle sorte que, lors du transport, ils agissent en tant qu'amortisseurs pour la suspension du véhicule.

10. Remorque à un essieu selon la revendication 3, caractérisée en ce que deux supports d'essieux (22), qui portent les essieux des roues (19) de la remorque et qui s'étendent des deux côtés de l'unité formant plancher (2), ainsi que les extrémités, fixées sur la remorque, des barres de traction (18) sont montées de manière à pouvoir tourner dans deux supports latéraux (9a), reliés entre eux avec blocage en rotation, de l'unité formant plancher (2), en étant à une distance prédéterminée l'un de l'autre, que les barres de traction (18) comportent chacune, sur leur extrémité tournée vers le paler, un levier de commande (25) s'étendant au-delà du point de support (24) et portant un téton coulissant (26), et que les supports d'essieux (22) comportent également chacun un levier (27) qui s'étend au-delà de leur point de support (23) et comportant une came de commande (28) pour les tétons coulissants (26), et que les leviers correspondants (25, 27) sont dimensionnés de telle sorte et sont reliés par articulation d'une part à la tige de piston (29) et d'autre part au cylindre (30) d'un système hydraulique, de telle sorte que grâce au guidage des tétons coulissants (26) sur les cames de commande (28) du levier (27), l'unité formant plancher (2) est transférée, lors de l'accroissement de la pression dans le vérin hydraulique (30), de sa position au sol dans la position basculée, en passant par sa position de transport.

Fig.1

Fig. 2

Fig.3

Fig.4

Fig.5

**0 198 042**

Fig. 6

Fig. 7

Fig. 8